# EUROPÄISCHE PATENTSCHRIFT

(11) **EP 2 523 822 B1**
(45) Veröffentlichungstag und Bekanntmachung des Hinweises auf die Patenterteilung: **08.02.2017**
(21) Anmeldenummer: 10805226.7
(22) Anmeldetag: 20.12.2010
(51) Int. Cl.: B60L 11/12, B60K 6/46, B60K 6/40, B60K 6/26

(54) **ENERGIEUEBERTRAGUNGSSTRANG**
ENERGY TRANSMISSION STRAND
CHAÎNE DE TRANSMISSION D'ÉNERGIE

(30) Priorität: 15.01.2010 DE 102010004709
(43) Veröffentlichungstag der Anmeldung: 21.11.2012
(73) Patentinhaber: MAGNA STEYR Engineering AG & Co KG, 8041 Graz (AT)
(72) Erfinder: BOUVIER, Stephan, A-8010 Graz (AT); LANZENBERGER, Heinz, A-8042 Graz (AT); SCHMIDHOFER, Andreas, A-8600 Bruck An Der Mur (AT)
(74) Vertreter: Zangger, Bernd
(86) Internationale Anmeldenummer: PCT/EP2010/070298
(87) Internationale Veröffentlichungsnummer: WO 2011/085919

(56) Entgegenhaltungen:
- EP-A1- 0 744 314
- EP-A1- 1 329 351
- CH-A- 506 398
- DE-A1- 19 813 146
- US-A1- 2006 049 797

## Beschreibung

Die vorliegende Erfindung betrifft einen Energieübertragungsstrang für ein Range-Extender-Modul.

In zukünftigen Antrieben für Elektrofahrzeuge sollen Aggregate eingesetzt werden, die die Reichweite des Fahrzeugs über die rein elektrische Reichweite hinaus erweitern. Dazu sind sogenannte Range-Extender-Module in Diskussion, welche eine kleine Verbrennungskraftmaschine enthalten, die einen mechanisch gekuppelten Generator zur Erzeugung von Hilfs- bzw. Notstrom antreibt. Die Verbrennungskraftmaschine wird dabei kontinuierlich in ihrem optimalen Arbeitspunkt betrieben, wodurch die Emissions- und Geräuschentwicklung minimiert werden kann.

Bekannte Lösungen für solche Energieübertragungsstränge verwenden den Generator im Umkehrbetrieb auch als Motor zum Anlassen der Verbrennungskraftmaschine. Dazu wird dem Generator ein bidirektionales Invertermodul nachgeschaltet, welches im Generatorbetrieb aus dem Generatorwechselstrom Gleichstrom für die Fahrzeugbatterie erzeugt und im Motorbetrieb Gleichstrom aus der Fahrzeugbatterie in den entsprechenden Wechselstrom zur Speisung des Generators umwandelt. Ein solches bidirektionales Invertermodul ist komplex und entsprechend kostspielig. Außerdem müssen der Generator und das Invertermodul für das hohe Anlaßdrehmoment der Verbrennungskraftmaschine und damit einen entsprechend hohen Anlaßstrom ausgelegt werden. Dies bedeutet einen großen Bauraum und großes Gewicht, was insbesondere für kleinere Elektrofahrzeuge aus Kosten- und Platzgründen nicht praktikabel ist. Zusätzlich benötigt z.B. ein Synchrongenerator, wenn er als Motor verwendet wird, für den Betrieb einen Winkellagesensor, was einen weiteren Kostennachteil darstellt.

Die CH 506 398 A offenbart eine Energieübertragungsstrang umfassend eine Abfolge aus einer Verbrennungskraftmaschine, einem von dieser mechanisch angetriebenen Wechselstromgenerator und einem daran elektrisch angeschlossenen Gleichrichter, wobei die Verbrennungskraftmaschine mit einem eigenen elektrischen Startermotor ausgestattet ist. Auf Grund der hohen Impedanz des Gleichrichters, beeinflusst er nicht das Spannungsniveau der Batterie.

Die Erfindung setzt sich zum Ziel, einen Energieübertragungsstrang für ein Range-Extender-Modul zu schaffen, welcher kostengünstiger, leichtgewichtiger und platzsparender ist als die bekannten Konstruktionen, insbesondere um einen Einsatz in kleinen Stadtfahrzeugen zu ermöglichen.

Dieses Ziel wird erfindungsgemäß mit einem Energieübertragungsstrang erreicht, der sich auszeichnet durch die Abfolge aus einer Verbrennungskraftmaschine, einem von dieser mechanisch angetriebenen Wechselstromgenerator und einem daran elektrisch angeschlossenen Gleichrichter mit einem nachgeschalteten unidirektionalen mikroprozessorgesteuerten DC/DC-Wandler zur Speisung einer elektrischen Hochvolt-Batterie für einen elektrischen Fahrantrieb als Last, wobei die Verbrennungskraftmaschine mit einem eigenen elektrischen Startermotor ausgestattet ist und wobei der DC/DC-Wandler das Spannungsniveau der Hochvolt-Batterie mikroprozessorgesteuert bereitstellen kann.

Die Erfindung beruht auf der überraschenden Erkenntnis, daß beträchtliche Kosten, Gewicht und Bauraum eingespart werden können, wenn der Energieübertragungsstrang ausschließlich unidirektional aufgebaut wird, d.h. aus der unidirektionalen Abfolge von Startermotor -> Verbrennungskraftmaschine -> Wechselstromgenerator -> Gleichrichter -> DC/DC-Wandler, selbst wenn dies einen eigenen Startermotor erfordert: Ein kostspieliger bidirektionaler Inverter entfällt. Weil Inverter und Generator nicht für den hohen Anlaßstrom einer Verbrennungskraftmaschine dimensioniert werden müssen, können beträchtlicher Bauraum und Gewicht gespart werden. Auch kann mit einem einfachen passiven Gleichrichter das Auslangen gefunden werden, und der gesonderte Startermotor für die Verbrennungskraftmaschine ist ein handelsübliches, kostengünstiges Teil. Darüber hinaus entfällt auch der Winkellagesensor im Generator, was weitere Kosten spart.

Besonders vorteilhaft ist es, wenn gemäß einer bevorzugten Ausführungsform der Erfindung der Startermotor ein handelsüblicher Standard-12-Volt-Anlassermotor ist.

Der Wechselstromgenerator ist bevorzugt eine dreiphasige permanenterregte Synchronmaschine (PSM), welche sich durch besonders einfache und robuste Konstruktion auszeichnet.

Aus demselben Grund ist es besonders günstig, wenn der Gleichrichter ein dreiphasiger passiver Vollwellengleichrichter ist, bevorzugt eine Diodenbrücke.

Aufgrund der Unidirektionalität des Energieübertragungsstrangs kann ein sehr einfacher DC/DC-Wandler eingesetzt werden, wie er bevorzugt durch eine mikroprozessorgesteuerte Ladungspumpe gebildet wird.

Erfindungsgemäß ist die Last eine Hochvolt-Batterie für einen elektrischen Fahrantrieb, für welche der DC/DC-Wandler das entsprechende Spannungsniveau mikroprozessorgesteuert bereitstellen kann.

Eine weitere vorteilhafte Ausführungsform der Erfindung zeichnet sich dadurch aus, daß die Verbrennungskraftmaschine und/oder der Wechselstromgenerator eine Flüssigkeitskühlung aufweisen, welche den Gleichrichter und/oder den DC/DC-Wandler mitkühlt. Dadurch können weitere Komponenten und damit Bauraum, Gewicht und Kosten eingespart werden.

Besonders vorteilhaft ist es, wenn der Gleichrichter und der DC/DC-Wandler in das Gehäuse des Wechselstromgenerators integriert oder daran angeflanscht sind, um eine autarke Einheit zu schaffen.

Bevorzugt ist der Energieübertragungsstrang zur Gänze in Form eines austauschbaren Range-Extender-Moduls für ein Hybridfahrzeug ausgebildet, in welches er beispielsweise modular austauschbar eingesteckt werden kann.

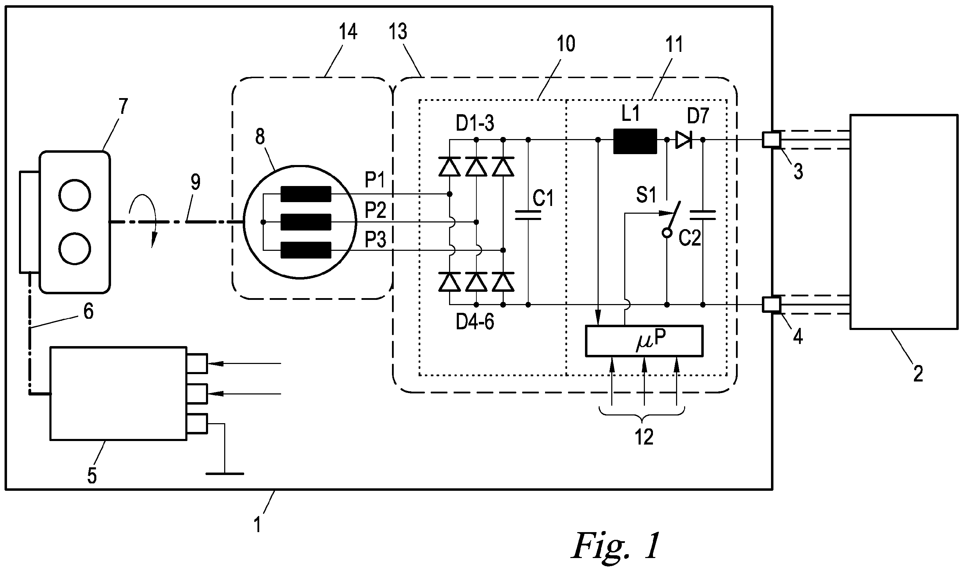

Die Erfindung wird nachstehend anhand eines in der beigeschlossenen Zeichnung dargestellten Ausführungsbeispieles näher erläutert, in welcher Fig. 1 ein Blockschaltbild des Energieübertragungsstrangs der Erfindung zeigt.

In Fig. 1 ist ein Range-Extender-Modul 1 dargestellt, das eine Hochvoltbatterie 2 für einen (nicht weiter dargestellten) elektrischen Fahrantrieb eines Hybridfahrzeugs speist. Das Range-Extender-Modul 1 ist als autarke, modular austauschbare Einheit z.B. in einem Gehäuse oder auf einem Baugruppenträger angeordnet und mit elektrischen Anschlüssen 3, 4 zur Verbindung mit der Hochvoltbatterie 2 ausgestattet.

Das Range-Extender-Modul 1 enthält einen unidirektionalen Energieübertragungsstrang, welcher aufeinanderfolgend umfaßt:
- einen Startermotor 5, wie er z.B. als Standard-12-Volt-Anlassermotor für Kraftfahrzeuge handelsüblich erhältlich ist;
- eine vom Startermotor 5 über z.B. einen Riementrieb oder ein Ritzel 6 anlaßbare Verbrennungskraftmaschine 7 kleiner bis mittlerer Leistung, z.B. im Bereich von 15 bis 30 kW; die Verbrennungskraftmaschine 7 wird bevorzugt von einem (nicht dargestellten) Steuergerät geregelt, welches über ein geeignetes Bussystem, z.B. nach dem HS-CAN- oder Flexray-Standard, mit dem Restfahrzeug kommunizieren kann;
- einen Wechselstromgenerator 8, bevorzugt in Form einer dreiphasigen permanenterregten Synchronmaschine (PSM), welcher Generator 8 von der Verbrennungskraftmaschine 7 über eine Welle 9, einen Zahnradtrieb, Riementrieb od. dgl. angetrieben ist;
- einen an den Generator 8 elektrisch angeschlossenen Gleichrichter 10, bevorzugt einen einfachen passiven dreiphasigen Vollwellengleichrichter in Form einer Diodenbrücke aus sechs schnellen Dioden D1 - D6 und einem Glättungskondensator C1;
- einen dem Gleichrichter 10 nachgeschalteten DC/DC-Wandler 11 zur Glättung und Auf- oder Abwärtstransformierung der Ausgangsspannung des Gleichrichters 10 auf das gewünschte Potential an den Anschlüssen 3, 4; der DC/DC-Wandler 11 ist in der gezeigten bevorzugten Ausführungsform eine mikroprozessorgesteuerte Ladungspumpe mit einer Speicherinduktivität L1, einer Speicherkapazität C2 und einer Ladeschaltung aus einer Diode D7 und einem von einem Mikroprozessor µP gesteuerten Schalter S1.

Der Mikroprozessor µP betreibt den Schalter S1 und damit den DC/DC-Wandler 11 mit hoher interner Taktfrequenz, so daß die Baugröße der Komponenten klein gehalten werden kann. Mit dem Takt- und Tastverhältnis des Schalters S1 können die Spannung und damit auch die übertragene Leistung eingestellt werden. Der Mikroprozessor µP übernimmt dabei auch die Kommunikation über einen Bus 12, z.B. nach dem HS-CAN- oder FlexRay-Standard, mit Fahrzeugkomponenten, um die gewünschte Leistung freizugeben.

Als Regelgröße wird beispielsweise die zu erzeugende Leistung oder der gewünschte Ladestrom für die Hochvoltbatterie 2 vorgegeben. Die Regelung kann z.B. Daten von einem Stromsensor in den Ausgangsanschlüssen 3, 4, einem Spannungssensor am Ein- und/oder Ausgang des DC/DC-Wandlers 11, sowie von internen Temperatursensoren erhalten. Spezielle Ladekennlinien für die Hochvoltbatterie 2 können in Software realisiert und über den Mikroprozessor µP gesteuert werden.

Durch zusätzliche Schutzmaßnahmen im DC/DC-Wandler 11, z.B. einen Abschalttransistor, können im Fehlerfall, z.B. bei Überdrehzahl, am Generator 8 auftretende Überspannungen von den Anschlüssen 3, 4 entkoppelt und damit ungewollte Aufladungen oder Spannungsüberhöhungen an der elektrischen Last verhindert werden.

Der Gleichrichter 10 und/oder der DC/DC-Wandler 11 sind bevorzugt flüssigkeitsgekühlt, und zwar besonders bevorzugt von derselben Flüssigkeitskühlung, welche auch die Kühlung des Generators 8 und/oder der Verbrennungskraftmaschine 7 übernimmt. Bevorzugt können der Gleichrichter 10 und der DC/DC-Wandler 11 in ein gemeinsames Gehäuse 13 und insbesondere bevorzugt auch mit dem oder in das Gehäuse 14 des Generators 8 integriert werden.

Der Einsatzbereich des Energieübertragungsstrangs 5 - 11 ist nicht auf die dargestellte Anwendung des Ladens einer Hochvoltbatterie 2 oder Speisens eines elektrischen Fahrantriebs beschränkt, sondern kann auch stationäre Anwendungen umfassen, z.B. in Hilfs- oder Notstromaggregaten.

Die Erfindung ist demgemäß nicht auf die dargestellten Ausführungsformen beschränkt, sondern umfaßt alle Varianten und Modifikationen, die in den Rahmen der angeschlossenen Ansprüche fallen.

## Patentansprüche

1. Energieübertragungsstrang für ein Range-Extender-Modul, mit einer Abfolge aus einer Verbrennungskraftmaschine (7), einem von dieser mechanisch angetriebenen Wechselstromgenerator (8) und einem daran elektrisch angeschlossenen Gleichrichter (10) mit einem nachgeschalteten unidirektionalen mikroprozessorgesteuerten DC/DC-Wandler (11) zur Speisung einer Hochvolt-Batterie für einen elektrischen Fahrantrieb, wobei die Verbrennungskraftmaschine (7) mit einem eigenen elektrischen Startermotor (5) ausgestattet ist und wobei der DC/DC-Wandler das Spannungsniveau der Hochvolt-Batterie mikroprozessorgesteuert bereitstellen kann.

2. Energieübertragungsstrang nach Anspruch 1, **dadurch gekennzeichnet, daß** der Startermotor (5) ein Standard-12-Volt-Anlassermotor ist.

3. Energieübertragungsstrang nach Anspruch 1 oder 2, **dadurch gekennzeichnet, daß** der Wechselstromgenerator (8) eine dreiphasige permanenterregte Synchronmaschine ist.

4. Energieübertragungsstrang nach einem der Ansprüche 1 bis 3, **dadurch gekennzeichnet, daß** der Gleichrichter (10) ein dreiphasiger passiver Vollwellengleichrichter ist, bevorzugt eine Diodenbrücke (D1 - D6).

5. Energieübertragungsstrang nach einem der Ansprüche 1 bis 4, **dadurch gekennzeichnet, daß** der DC/DC-Wandler (11) eine mikroprozessorgesteuerte Ladungspumpe ist.

6. Energieübertragungsstrang nach einem der Ansprüche 1 bis 5, **dadurch gekennzeichnet, daß** die Verbrennungskraftmaschine (7) und/oder der Wechselstromgenerator (8) eine Flüssigkeitskühlung aufweist, welche den Gleichrichter (10) mitkühlt.

7. Energieübertragungsstrang nach einem der Ansprüche 1 bis 6, **dadurch gekennzeichnet, daß** die Verbrennungskraftmaschine (7) und/oder der Wechselstromgenerator (8) eine Flüssigkeitskühlung aufweist, welche den DC/DC-Wandler (11) mitkühlt.

8. Energieübertragungsstrang nach einem der Ansprüche 1 bis 6, **dadurch gekennzeichnet, daß** der Gleichrichter (10) und der DC/DC-Wandler (11) in das Gehäuse (13, 14) des Wechselstromgenerators (8) integriert oder daran angeflanscht sind.

9. Energieübertragungsstrang nach einem der Ansprüche 1 bis 8, **dadurch gekennzeichnet, daß** er in Form eines austauschbaren Range-Extender-Moduls (1) für ein Hybridfahrzeug ausgebildet ist.

## Claims

1. Energy transmission strand for a range extender module, having a sequence comprising an internal combustion engine (7), an AC generator (8) which is mechanically driven by the said internal combustion engine, and a rectifier (10) which is electrically connected to the said AC generator and has a unidirectional microprocessor-controlled DC/DC converter (11) connected downstream for the purpose of feeding a high-voltage battery for an electric traction drive, wherein the internal combustion engine (7) is equipped with its own electric starter motor (5), and wherein the DC/DC converter can provide the voltage level for the high-voltage battery in a microprocessor-controlled manner.

2. Energy transmission strand according to Claim 1, **characterized in that** the starter motor (5) is a standard 12-volt starter motor.

3. Energy transmission strand according to Claim 1 or 2, **characterized in that** the AC generator (8) is a three-phase permanent-magnet synchronous machine.

4. Energy transmission strand according to one of Claims 1 to 3, **characterized in that** the rectifier (10) is a three-phase passive full-wave rectifier, preferably a diode bridge (D1 - D6).

5. Energy transmission strand according to one of Claims 1 to 4, **characterized in that** the DC/DC converter (11) is a microprocessor-controlled charge pump.

6. Energy transmission strand according to one of Claims 1 to 5, **characterized in that** the internal combustion engine (7) and/or the AC generator (8) has a liquid cooling system which also cools the rectifier (10).

7. Energy transmission strand according to one of Claims 1 to 6, **characterized in that** the internal combustion engine (7) and/or the AC generator (8) have/has a liquid cooling system which also cools the DC/DC converter (11).

8. Energy transmission strand according to one of Claims 1 to 6, **characterized in that** the rectifier (10) and the DC/DC converter (11) are integrated into the housing (13, 14) of the AC generator (8) or are flange-connected to the said housing of the AC generator.

9. Energy transmission strand according to one of Claims 1 to 8, **characterized in that** it is in the form of an exchangeable range extender module (1) for a hybrid vehicle.

## Revendications

1. Chaîne de transmission d'énergie pour un module prolongateur d'autonomie, comprenant successivement un moteur à combustion interne (7), un générateur de courant alternatif (8) entraîné de façon mécanique par ce dernier et un redresseur (10) raccordé électriquement à celui-ci et muni d'un convertisseur continu/continu unidirectionnel commandé par microprocesseur (11) connecté en aval pour alimenter une batterie à haute tension destinée à un dispositif de propulsion électrique, dans lequel le moteur à combustion interne (7) est équipé de son propre démarreur électrique (5) et dans lequel le convertisseur continu/continu peut fournir de manière commandée par microprocesseur le niveau de tension de la batterie à haute tension.

2. Chaîne de transmission d'énergie selon la revendication 1, **caractérisée en ce que** le démarreur (5) est un moteur de démarreur standard à 12 volt.

3. Chaîne de transmission d'énergie selon la revendication 1 ou 2, **caractérisée en ce que** le générateur de courant alternatif (8) est un moteur synchrone triphasé à excitation permanente.

4. Chaîne de transmission d'énergie selon l'une quelconque des revendications 1 à 3, **caractérisée en ce que** le redresseur (10) est un redresseur pleine onde triphasé passif, de préférence un pont de diodes (D1 - D6).

5. Chaîne de transmission d'énergie selon l'une quelconque des revendications 1 à 4, caractérisée en ce le convertisseur continu/continu (11) est une pompe de charge commandée par microprocesseur.

6. Chaîne de transmission d'énergie selon l'une quelconque des revendications 1 à 5, **caractérisée en ce que** le moteur à combustion interne (7) et/ou le générateur de courant alternatif (8) comporte un refroidissement par liquide qui refroidit également le redresseur (10).

7. Chaîne de transmission d'énergie selon l'une quelconque des revendications 1 à 6, **caractérisée en ce que** le moteur à combustion interne (7) et/ou le générateur de courant alternatif (8) comporte un refroidissement par liquide qui refroidit également le convertisseur continu/continu (11).

8. Chaîne de transmission d'énergie selon l'une quelconque des revendications 1 à 6, **caractérisée en ce que** le redresseur (10) et le convertisseur continu/continu (11) sont intégrés dans le boîtier (13, 14) du générateur de courant alternatif (8) ou sont bridés sur celui-ci.

9. Chaîne de transmission d'énergie selon l'une quelconque des revendications 1 à 8, **caractérisée en ce qu'**elle est réalisée sous la forme d'un module prolongateur d'autonomie (1) remplaçable destiné à un véhicule hybride.
